Europäisches Patentamt

European Patent Office

Office européen des brevets

(11) Veröffentlichungsnummer: **0 224 878**
**A2**

(12) **EUROPÄISCHE PATENTANMELDUNG**

(21) Anmeldenummer: **86116496.0**

(22) Anmeldetag: **27.11.86**

(51) Int. Cl.⁴: **F01C 1/348**

(30) Priorität: **04.12.85 DE 3542776**

(43) Veröffentlichungstag der Anmeldung:
**10.06.87 Patentblatt 87/24**

(84) Benannte Vertragsstaaten:
**CH DE FR GB IT LI SE**

(71) Anmelder: **Fickelscher, Kurt Gerhard**
**Herderstrasse 19**
**D-6710 Frankenthal(DE)**

(72) Erfinder: **Fickelscher, Kurt Gerhard**
**Herderstrasse 19**
**D-6710 Frankenthal(DE)**

(74) Vertreter: **Klose, Hans, Dipl.-Phys. et al**
**Kurfürstenstrasse 32**
**D-6700 Ludwigshafen(DE)**

(54) **Maschine, insbesondere Arbeitsmaschine zum Verdichten und Fördern von Fluiden.**

(57) Eine Maschine, insbesondere Arbeitsmaschine zum Verdichten und Fördern von Fluiden, enthält einen Kolben (1) und einen dünnwandigen Rollring - (7), der exzentrisch zur Achse (M1) des Kolbens (1) drehbar angeordnet ist und an der Umfangsfläche des Kolbens über einen Winkelbereich (phi) flächig anliegt. Ferner ist wenigstens ein Trennschieber - (12) zwischen Arbeitsräumen (S, D) vorhanden, deren Volumen bei Drehung des Rollringes (7) veränderbar ist. Diese Maschine soll dahingehend weitergebildet werden, daß der Fluiddurchsatz sowie die Antriebsdrehzahl vergrößert werden können, wobei kleine Abmessungen und ein geringes Gewicht erzielt werden sollen. Zur Lösung wird vorgeschlagen, daß der Rollring (7) über wenigstens ein Lager (125) in einem Lagerträger (110) abgestützt ist und von diesem an die Umfangsfläche des Kolbens (1) gepreßt wird und daß der um ein Steuerrohr (3) drehbar angeordnete Kolben (1) in dem genannten Winkelbereich (phi) an der Innenfläche des Rollringes (7) anliegt. Der Rollring (7) umschlingt den Kolben (1) in dem Winkelbereich (phi) zylindrisch und wird von dem Kolben (1) über Reibschluß angetrieben.

FIG.1

## Maschine, insbesondere Arbeitsmaschine zum Verdichten und Fördern von Fluiden

Die Erfindung bezieht sich auf eine Maschine, insbesondere Arbeitsmaschine zum Verdichten und Fördern von Fluiden, mit einem Kolben, mit einem dünnwandigen Rollring, der exzentrisch zur Achse des Kolbens angeordnet ist und an dessen Umfangsfläche über eine Winkelbereich anliegt, und mit wenigstens einem Trennschieber zwischen Arbeitsräumen, deren Volumen bei Drehung des Rollringes veränderbar ist.

Aus der US-PS 45 80 957 ist eine derartige Maschine bekannt, deren Rollring bzw. Ringkolben einen größeren Durchmesser als der Kolben aufweist, der als feststehendes Gehäuse ausgebildet ist. Der Rollring ist in einem kreisförmigen Antriebsring gelagert, dessen Innenraum exzentrisch zu dem Kolbengehäuse versetzt ist. Ein federbeaufschlagter Trennschieber erzeugt bei Drehung volumetrisch veränderbare Arbeitsräume, wobei pro Umdrehung das zu fördernde Medium je einmal angesaugt und ausgeschoben wird. Das maximal mögliche Ansaugvolumen pro Umdrehung ist durch das Verhältnis der Durchmesser von Rollring und Kolben vorgegeben. Aufgrund der engen Platzverhältnisse im stationär angeordneten Kolbengehäuse lassen sich unter praktischen Bedingungen Durchmesserunterschiede nur von 10 bis 12 % sinnvoll realisieren. Ferner wird die maximale Drehzahl durch die im Kolbengehäuse angeordnete Nachführfeder begrenzt, die eine große Vorspannung bei hochfrequenter Nachführung des Trennschiebers haben muß; die maximale Drehzahl der vorbekannten Maschine liegt bei etwa 4000 Umdrehungen pro Minute. Eine weitere Begrenzung der maximalen Drehzahl wird durch die Grenzdrehzahl der Wälzlager vorgegeben, welche den Rollring radial außen umgeben. Aufgrund der zusätzlichen Deformation im Abrollbereich muß die Grenzdrehzahl der Standardwälzlager reduziert werden. Ferner erfordert die Maschine, insbesondere bei höheren Drehzahlen, eine sorgfältige Auswuchtung. Mit der vorbekannten Maschine können andererseits in einer Stufe Drücke bis 10 bar oder Vakuum bis 10 mbar erzeugt werden, und zwar bei völliger Ölfreiheit im Arbeitsraum. Die Verdichtungswärme kann in einfacher Weise abgeführt werden und die Reibungsverluste sind gering, so daß der spezifische Kraftbedarf um 20 bis 30 % niedriger ist als bei anderen Bauarten. Die vorbekannte Maschine bietet insbesondere bei Ausbildung als Rollringverdichter gemäß Figur 22 der oben genannten US-PS aufgrund eines durch das Fehlen von Schadräumen günstigen thermischen Verhaltens, der möglichen Innen-und Außenkühlung sowie geringer Reibungsverluste und dem folglich geringen spezifischen Kraftbedarf nicht unerhebliche Vorteile gegenüber vergleichbaren Maschinen anderer Bauart.

So ist aus der US-PS 45 14 156 ein Verdichter bekannt, dessen Ringkolben eine relativ große Wandstärke aufweist und über ein Luftlager in dem stationär angeordneten Gehäuse gelagert ist. Innerhalb des Ringkolbens ist exzentrisch ein Drehkolben angeordnet, der einen kleineren Durchmesser als der Ringkolben aufweist und vier radial bewegbare Trennschieber enthält. Der im wesentlichen starre Ringkolben liegt mit seiner Innenfläche praktisch nur linienförmig an der Außenfläche des Drehkolbens an. Ein derartiger Verdichter erfordert eine extrem präzise Fertigung, zumal die radiale Spaltbreite des Luftlagers kleiner als 0,1 mm groß sein soll.

Ferner ist aus der FR-PS 12 86 068 ein Verdichter mit einem praktisch starren, dickwandigen Ringkolben bekannt, der an den axialen Enden jeweils mit Wälzlagern in dem Gehäuse gelagert ist. Der radial innerhalb des Ringkolbens angeordnete Drehkolben enthält zwei diametral einander gegenüberliegende Trennschieber, die über eine Feder gegeneinander abgestützt sind. Der Drehkolben liegt wiederum praktisch nur über einer Berührungslinie an der Innenfläche des Ringkolbens an, so daß Schwierigkeiten vor allem im Hinblick auf Abdichtung und Verschleiß gegeben sind.

Auch die FR-PS 15 48 031 betrifft einen Verdichter mit einem dickwandigen Ringkolben und einem radial innerhalb desselben angeordneten Drehkolben. Aufgrund der oben aufgezeigten Schwierigkeiten ist auf der Innenfläche des Ringkolbens eine Schicht aus Kohlenstoff oder Polytetrafluoräthylen angeordnet.

Der Erfindung liegt die Aufgabe zugrunde, eine Maschine der eingangs genannten Art mit geringem konstruktiven Aufwand dahingehend weiterzubilden, daß ein vergrößerter Fluiddurchsatz ermöglicht wird und auch die Antriebsdrehzahl erhöht werde kann. Dem Exzentrizität des Ringkolbens soll bei hoher Funktionssicherheit vergrößert werden können, wobei insgesamt kleine Abmessungen bei niedrigem Gewicht realisiert werden sollen. Die Maschine soll vor allem als Ladeluftkompressor in Fahrzeugen zum Einsatz gelangen und folglich einen geringen Platz-und Gewichtsbedarf erordern. Federn zwecks Nachführung von Trennschiebern oder ähnlichen sollen entfallen. Hohe Festigkeitsbelastungen der Bauteile, und zwar insbesondere des Rollringes, des Kolbens und der Lagerungen sollen reduziert werden. Schließlich soll die Maschine eine große Laufruhe und eine große Lebensdauer aufweisen.

Zur Lösung dieser Aufgabe wird vorgeschlagen, daß der Rollring über ein deformierbares Wälzlager in einem Lagerträger gelagert ist, daß der um ein Steuerrohr drehbare Kolben in dem genannten Winkelbereich an der Innenfläche des Rollringes anliegt und daß der den Kolben in dem genannten Winkelbereich flächig umschlingende Rollring vom Kolben über Reibschluß antreibbar ist.

Die erfindungsgemäße Maschine zeichnet sich durch eine einfache Konstruktion und durch eine Vergrößerung des spezifischen Fluiddurchsatzes aus. Der Kolben ist drehbar auf einem feststehenden Steuerrohr radial und axial gelagert und kann über Riemen oder direkt gekuppelt angetrieben werden. Der Drehkolben enthält insbesondere zwei Trennschieber, die tangential zum Steuerrohr angeordnet sind, durch Fliehkraft betätigt werden und pro Umdrehung zwei Ausschübe erzeugen. Der dünnwandige Rollring ist exzentrisch um den Drehkolben angeordnet und wird in Folge der Konfiguration des Lagerträgers über die Wälzlager an den drehbaren Kolben angepreßt, der nachfolgend der Einfachheit halber als Drehkolben bezeichnet wird. Der Rollring umschlingt den Drehkolben flächig über einen vorgebbaren großen Winkel-bereich, wobei sich ein · Winkelbereich in der Größenordnung von 60° als zweckmäßig erwiesen hat. Der Rollring wird kraft-und formschlüssig in Folge der federnden Anpressung bei Rotation des Drehkolbens angetrieben. Der Rollring rollt in gleicher Richtung und mit gleicher Umfangsgeschwindigkeit wie der Drehkolben, wobei die Winkelgeschwindigkeit entsprechend der Durchmesserdifferenz verschieden zu der des Drehkolbens ist. Durch die beiden tangential angeordneten Trennschieber kann die Exzentrizität auf ca. 20-25 % vom Durchmesser-Unterschied vergrößert werden. Weiterhin vergrößert sich das maximale Ansaugvolumen des jeweiligen Arbeitsraumes, der sichelförmig zwischen dem Trennschieber und der Berührungsfläche von Rollring und Drehkolben vorhanden ist. Infolge der Umschlingung des Drehkolbens durch den Rollring in dem vorgegebenen Winkelbereich von etwa 60 Winkelgraden werden die im Außenmantel des Drehkolbens in der Nähe der Trennschieber angeordneten Saugschlitze solange geschlossen, bis sich der Arbeits-bzw. Saugraum um etwa 30° über die 180°-Umdrehung hinaus vergrößert hat. Da pro Umdrehung des Drehkolbens von 360° zwei Ansaugungen erfolgen, vergrößert sich auch das Ansaugvolumen zweimal um den Betrag Delta V. Da diese Volumenvergrößerung im Bereich des größten Abstandes des Drehkolbens zum Rollring stattfindet, ergibt sich erfindungsgemäß eine Volumenvergrößerung von ca. 50-60 %, bezogen auf das durch die Durchmesserdifferenz entstandene Ansaugvolumen.

Im stehenden Steuerrohr, das gleichzeitig zur Lagerungg des Drehkolbens dient, wird ein Auslaßschlitz angeordnet, der bei Erreichen des gewünschten Enddruckes durch die Steuerkante des Drehkolbens geöffnet wird, so daß das komprimierte Gas durch die Öffnung des Steuerrohres an der Stirnseite des Kompressors abgeführt wird. Durch Verdrehen des Steuerrohres kann der gewünschte Enddruck eingestellt werden. Diese Ausführung benötigt weder Federn, noch Ventile. Ein Massenausgleich ist nicht notwendig. Der Lufteintritt erfolgt über mitrotierende, seitlich in den Kolbenflanschen angeordneten Öffnungen.

Eine weitere Vergrößerung des Saugvolumens um ca. 80 % des theoretischen Volumens ist bei umgekehrter Strömungsrichtung möglich. Hierbei wird die Luft durch das zentrale Steuerrohr angesaugt. Im Drehkolben sind unmittelbar vor den Trennschiebern axiale durchgehende Bohrungen angeordnet, die durch Schlitze oder Bohrungen im Außenmantel des Rollkolbens mit dem Verdichtungsraum in Verbindung stehen und durch entsprechend gestaltete federnde Ventile beim Ansaugvorgang geschlossen sind. Nach Beendigung des Ansaugvorganges wird durch Steuerschlitze der Saugraum vom Druckraum getrennt. Die komprimierte Luft tritt seitlich aus den mitrotierenden Flanschen aus. Diese Ausführung ist in einfachster Form für ölfreien Vacuumbetrieb besonders geeignet.

Die Realisierung hoher Antriebsdrehzahlen, die infolge der geringen Reibgeschwindigkeiten bis ca. 10000 -12000 Umdrehungen pro Minute betragen können, erfordert eine neue Lagerausführung. Die Höchstdrehzahl eines Standardwälzlagers wird erstrangig begrenzt durch die Gleitreibung im Lagerkäfig. So beträgt z. B. die Grenzdrehzahl $n$ max. eines Lagers mit dem Innendurchmesser $d = 100$ mm bei Ölschmierung ca. 4000 Umdrehungen pro Minute. Bei einer zusätzlichen Deformation des Lagers verringern sich die Spalträume zwischen Kugel-und Lagerkäfig, wodurch die Grenzdrehzahl um ca. 10 -20 % reduziert wird.

Das neu entwickelte Wälzlager besteht aus einem dünnwandigen Außenring, einem dünnwandigen Innenring, (der auch direkt als der Ringkolben ausgebildet sein kann). Zwischen beiden Ringen werden standardisierte kleine innere Wälzlager angeordnet, die mittels Bolzen in außerhalb des Lagerbereiches seitlich angeordneten elastischen Führungsringen befestigt sind. Somit wird die Gleitreibung zwischen Kugel und Käfig vermieden, und die volle Grenzdrehzahl der kleinen Wälzlager kann ausgenutzt werden. Die Wälzkörper der einzelnen Lager werden kaum radial belastet, da die Stützkräfte gegenüberliegend auf den Außenring der Wälzlager wirken. Die Wälzkörper werden lediglich durch geringe Rückstellkräfte bei zusätzlicher Deformation der elastischen Führungsringe sowie geringe Haltekräfte zur Distanzhaltung belastet.

Vorteilhaft können zur Erzeugung ölfreier Druckluft standardisierte Wälzlager mit seitlicher Abdichtung eingesetzt werden.

Die Grenzdrehzahl eines derartigen Lagers mit den DurchmesserAbmessungen 100/140 beträgt ca. 12000 Umdrehungen pro Minute.

Die Herstellkosten liegen niedriger als bei Standardlagern.

Die Erfindung wird nachfolgend anhand der in den Zeichnungen dargestellten Ausführungsbeispiele näher erläutert. Es zeigen:

Fig. 1 schematisiert und etwas überproportional einen Querschnitt durch eine Maschine,

Fig. 2 schematisch einen Querschnitt mit Drucksteuerrohr bei beginnender Verdichtung,

Fig. 3 die Ausführungsform von Fig. 2 bei einem Verdichtungsverhältnis von 1:2,5 und maximaler Füllung,

Fig. 4 schematisch eine Anordnung mit Ansaugerohr und s-förmigen Druckventilen bei maximaler Füllung,

Fig. 5 die Anordnung von Fig. 4 bei einem Verdichtungsverhältnis von ca. 1:3,

Fig. 6 den Längsschnitt durch eine Maschine für Riemenantrieb mit dem Fördermechanismus 1, 2, 3,

Fig. 7 die Stirnansicht der Maschine Fig. 6,

Fig. 8 einen geteilten Längsschnitt durch eine Maschine mit dem Förderprinzip 4 und 5,

Fig. 9 den Querschnitt durch Fig. 8, jedoch nach dem Förderprinzip gemäß den Figuren 1 bis 3,

Fig. 10 die Tandemanordnung von zwei Maschinen,

Fig. 11 bis 15 das Antriebs-Turbolager,

Fig. 16 die Anordnung eines Standardlagers für kleinere Drehzahlen,

Fig. 17 eine wesentliche Ausbildung der inneren Wälzlager des Stützlagers,

Fig. 18 eine Maschine mit Leerlaufregelung.

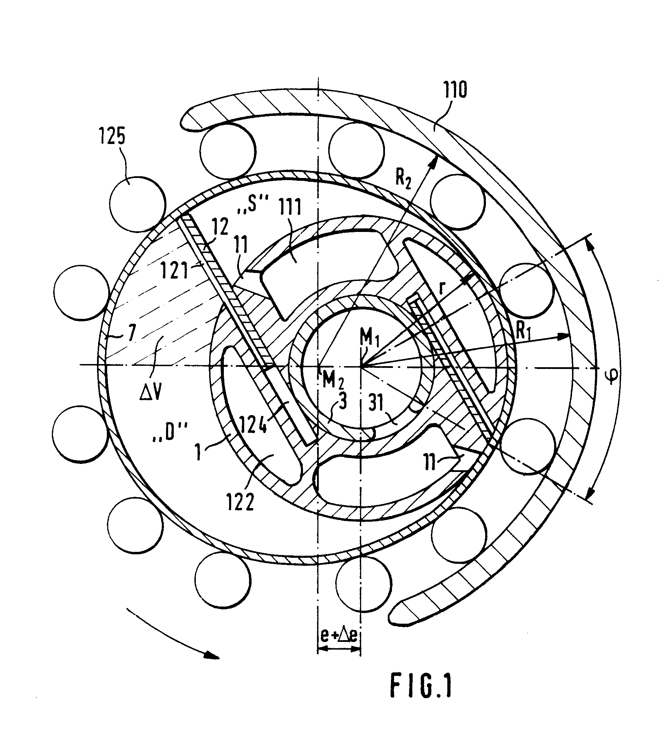

Fig. 1 zeigt schematisiert einen Querschnitt durch die Maschine im Augenblick der größten Füllung bei beginnender Verdichtung -Raum D - und gleichzeitiger Ansaugung -Raum S. Zentral auf dem Steuerrohr 3 mit dem Druckschlitz 31 ist drehbar der Drehkolben 1 gelagert. Zwei gegenüberliegende, tangential zum Steuerrohr in Schlitzen 124 geführte Trennschieber 12 erzeugen bei Drehung volumetrisch veränderliche Arbeitsräume, die in Saug-(S) und Druckraum (D) aufgeteilt sind. Unmittelbar hinter den Trennschiebern 12 verbinden Saugschlitze 11 die Ansaugeöffnungen 111 im Drehkolben 1 mit dem Saugraum der Maschine. Die mit Luftschlitzen 121 versehenen Trennschieber werden bei Drehung infolge der Fliehkraft dichtend an den Rollkolben 7 angedrückt und gleiten dort mit der Durchmesserdifferenz von Drehkolben und Rollring entsprechenden Relativgeschwindigkeit, die bei ca. 20 % Durchmesserunterschied ca. 1/5 der Umfangsgeschwindigkeit beträgt. Die Führungsschlitze 124 des Drehkolbens 1 sind seitlich zum Steuerrohr geöffnet, so daß das komprimierte Gas beim Überschneiden des Steuerschlitztes 31 durch die zentrale Bohrung des Steuerrohres abgeführt wird. Der Innendurchmesser des Drehkolbens 1 ist geringfügig größer als der Außendurchmesser des Steuerrohres 31 und wirkt somit als Drossel. Die Drehachse M 2 des Ringkolbens ist um den Abstand (was ungefähr der halben Durchmesserdifferenz entspricht) und den durch die Deformation des Ringkolbens 7 im Bereich $\phi$ erforderlichen Abstand $\Delta$ e vom Mittelpunkt M 1 des Drehkolbens entfernt.

Über einen zur Saugseite hin offenen Lagerkörper 110 wird ein elastisches Wälzlager 125 in Umfangsrichtung so deformiert, daß im Abwälzbereich ein Umschlingungswinkel von ca. $\phi$ = 60° erzeugt wird, über den bei Durchlauf ein Saugschlitz 11 dichtend abgedeckt wird. Hierdurch vergrößert sich das Ansaugvolumen um $\Delta$ V - (gestrichelt). Um dies zu erreichen, liegt der Krümmungsradius R 1 des Lagerkörpers 110 mit dem Krümmungsradius r des Drehkolbens im Bereich von ca. 60° auf dem gemeinsamen Drehpunkt M 1, der gleichzeitig die Drehachse des Drehkolbens ist. Der weitere Verlauf der Krümmung R 2 des Lagerkörpers 110 ist erfindungsgemäß derart vorgegeben, daß er dem natürlichen Kurvenverlauf, der durch die Verkleinerung des Krümmungsradius vom Ringkolben 7 ensteht, weitgehend entspricht. Im Drehkolben 1 sind die Kühlkammern 122 zur inneren Wärmeabführung angeordnet.

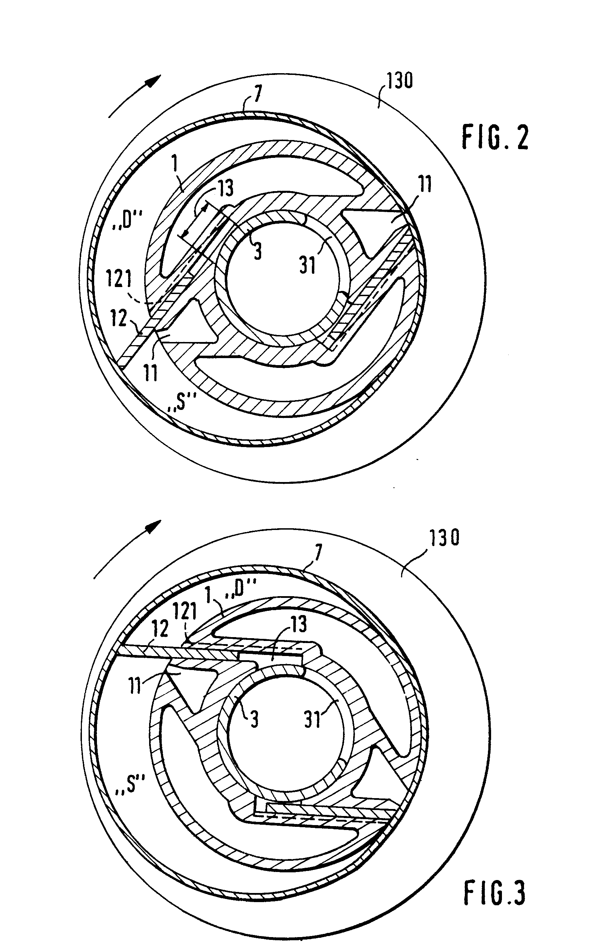

Anhand der Figuren 2 und 3 soll ein Verdichtungsmechanismus der Maschine erläutert werden, deren zentrales Steuerrohr als ein Drucksteuerrohr ausgebildet ist. Fig. 2 zeigt die Maschine bei beginnender Verdichtung, nachdem die rechte Einlauföffnung 11 im Rollkolben 1 durch die verkleinerte Krümmung des Rollringes 7 verschlossen wird. Zum Zeitpunkt der beginnenden Verdichtung verschließt die Hinterkante des Druckschlitzes 13 auf der rechten Seite der Fig. 2 den Steuerschlitz 31. Durch Drosselwirkung infolge der geringen Durchmesserdifferenz der Bohrung im Drehkolben zum Außendurchmesser des Steuerrohres wird eine nennenswerte Rückströmung des verdichtenden Gases verhindert. Gleichzeitig wird auf der Rückseite des Trennschiebers 11 Gas angesaugt. Die Verdichtung dauert solange, bis die im Drehkolben 1 angeordnete Vorderkante des zum Steuerschlitz hin offenen Druckschlitzes 13 die Vorderkante des Steuerschlitzes 31 überschneidet - (Fig. 3).

Fig. 3 zeigt die Maschine bei einem Verdichtungsverhältnis von ca. 1 : 3 im Augenblick der Übersteuerung des Steuerschlitzes 13. Das verdichtete Gas entweicht durch die Bohrung im Steuerrohr 3. In dieser Stellung wird auch das größte Ansaugevolumen erreicht. Das Zusatzvolumen Δ v wird bei einer Umdrehung zweimal gefördert.

Infolge nicht vorhandener Federn und Ventile ist diese Bauart unempfindlich gegen mitgeführte Flüssigkeiten und gut geeignet für Öleinspritzung, über die man in ähnlicher Form, wie bei Schraubenverdichtern, Verdichtungswärme während der Verdichtung entziehen kann. Gleichzeitig wird bei Vorhandensein von Öl die Drosselwirkung im Spalt zwischen Rollkolben und Steuerrohr 3 verbessert. Der Verdichterraum wird durch zwei seitliche Kolbenflansche 130 begrenzt. Der Ölumlauf eines Rollringverdichters ist geringer als bei einem Schraubenverdichter, bei dem das Öl, neben der Wärmeabführung, auch noch durch die Flankenreibung und erhebliche Gasrückströmungen aufgeheizt wird. Der spezifische Kraftbedarf des Rollringverdichters in der neuen Bauart liegt um ca. 20 -30 % niedriger als beim Schraubenverdichter. Bei Öleinspritzung kann der Rollringverdichter bei entsprechender Gestaltung der Lagerung Verdichtungsverhältnisse bis 1 : 16 erzeugen. Gleichzeitig ist die Maschine bei Öleinspritzung in der Lage, Vacua bis 1 mb zu erzeugen.

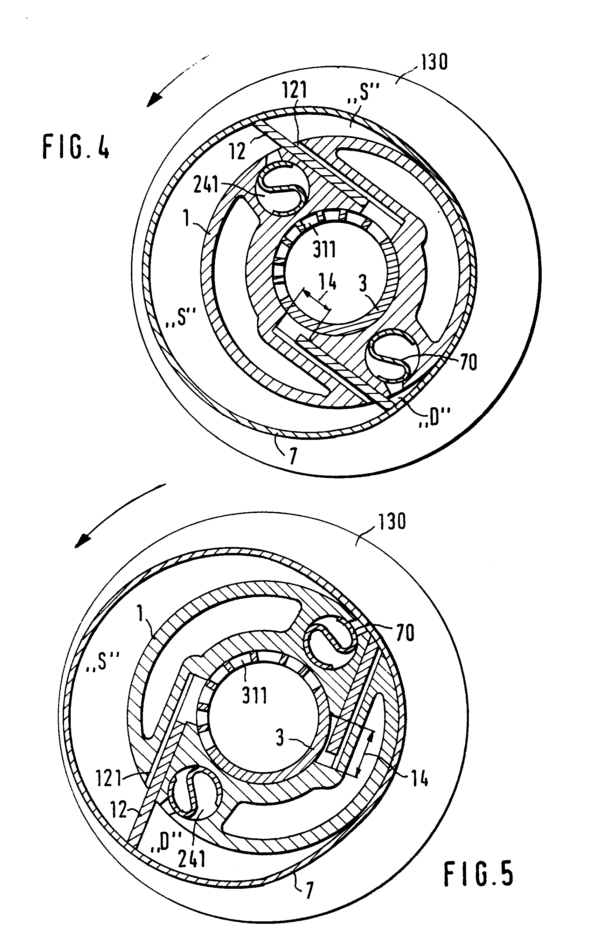

Fig. 4 und 5 zeigen den Verdichtungsmechanismus einer druckventilgesteuerten Maschine mit umgekehrter Förder-und Drehrichtung. Fig. 4 zeigt die Maschine nach Erreichen des max. Saug volumens. Das angesaugte Gasvolumen wird von den beiden Trennschiebern 12 eingeschlossen. Das obere Druckventil 70 ist geschlossen; die hintere Kante der Ansaugöffnung 14 im Drehkolben 1 hat die Einlaßöffnung 311 im Steuerrohr 3 überdeckt, während der Einlaßschlitz 14 des oberen Trennschiebers 12 bereits zum Ansaugen geöffnet ist bis das im Druckraum eingeschlossene Gas nahezu vollständig durch das s-förmige Ventil 70 ausgeschoben ist. Zum Gaseintritt befinden sich unterbrochene Schlitze 121 im Drehkolben 1.

Fig. 5 zeigt den Verdichtungsmechanismus bei einem Druckverhältnis von ca. 1 : 3. Das verdichtete Gas tritt seitlich durch die mitrotierenden Ventile 70 und Druckbohrungen 241 nach außen. Dieser Verdichtungsmechanismus vergrößert das Fördervolumen um ca. 80 %, bezogen aus das theoretische Volumen und eignet sich besonders für ölfreien Betrieb als Vacuumpumpe sowie im Gebläsebereich infolge des großen Luftdurchsatzes bis zu einem Förderdruck von ca. 3 bar.

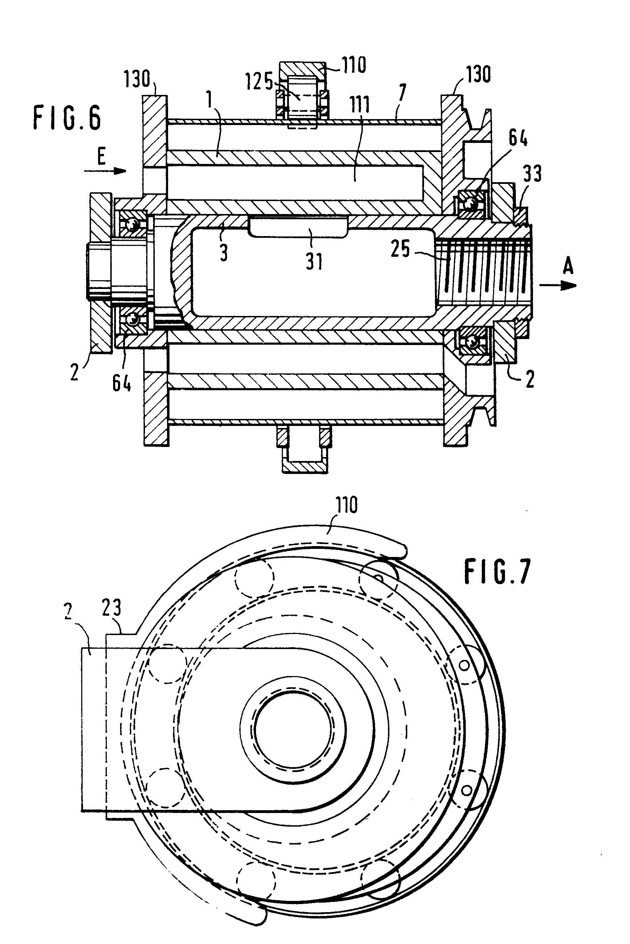

Fig. 6 zeigt den Längsschnitt durch eine Maschine in einfachster Bauweise mit Riemenantrieb. Das zentrale Drucksteuerrohr 3 trägt über Wälzlager 64 den Drehkolben 1. Das Steuerrohr 3 wird über eine Ringmutter 33 in dem Gehäusebügel 2 befestigt. Durch Lösen der Mutter 33 kann das Steuerrohr 3 zusammen mit dem Steuerschlitz 31 in Umfangsrichtung verstellt werden, wodurch ohne Nacharbeit unterschiedliche Druckverhältnisse einstellbar sind. Der Ringkolben 7 ist, wie in Fig. 1 beschrieben, um den Drehkolben angeordnet und wird über das Antriebslager 125 an den Drehkolben 1 angepreßt. Der Außenring des Antriebslagers 125 stützt sich im halboffenen Lagerring 110 ab, der wiederum mit dem Gehäusebügel 2 verschraubt ist. Der Drehkolben 1 trägt beiderseits Kolbenflansche 130 mit den Ansäugeöffnungen 111. Der Antrieb erfolgt über einen Riemenantrieb, zu dem der Kolbenflansch 130 benutzt wird. Das Gas wird über Öffnungen 111 im mitrotierenden Kolbenflansch 130 angesaugt. Zum Anschluß einer Druckleitung ist das Drucksteuerrohr 3 mit einer Gewindebohrung 25 ausgestattet.

Fig. 7 zeigt die Stirnansicht der Maschine gemäß Fig. 6. Der Lagerkörper 110 wird mit einem Zapfen 23 in dem einfach aufgebauten Gehäusebügel 2 befestigt. Durch Zwischenscheiben kann die gewünschte Vorspannung eingestellt werden.

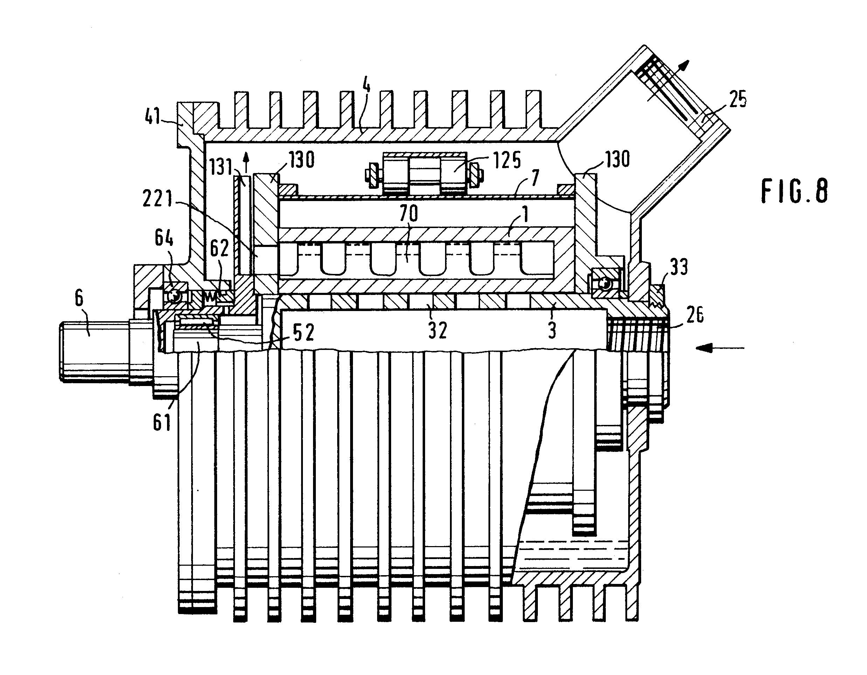

Fig. 8 zeigt einen Längsschnitt durch eine Maschine mit dem Verdichtungsmechanismus gemäß den Figuren 4 und 5. Im stehenden Gehäuse 4 wird das Saugsteuerrohr 3 mittels Ringmutter 33 befestigt. Die andere Seite des Steuerrohres 3 hat einen Zapfen 61, der sich über ein Nadellager 52 in einer entsprechenden Bohrung der Antriebsflanschwelle 6 abstützt. Die Antriebswelle 6 ist mit dem Drehkolben 1 zusammengeflanscht, der wiederum auf der Saugseite mittels Wälzlager 64 auf dem Saugrohr 3 abgestützt wird. Auf der Antriebsseite wird der Drehkolben 1 über die Flanschwelle 6 im Gehäusedeckel 41 mittels Wälzlager 64 gelagert. Die Abdichtung der Antriebswelle zum Verdichterraum erfolgt über eine Gleitringdichtung 62. Das Gas wird über den Saugstutzen 26 angesaugt und gelangt über Bohrungen 32, die in Umfangsrichtung im vorgesehenen Ansaugbereich des Saugrohres 3 liegen, in den Verdichterraum.

Das komprimierte Gas verläßt über die Druckventile 70 den Drehkolben durch die seitlich angeordneten Öffnungen 241. Die Flanschwelle 6 ist mit dem Kolbenflansch 130 zusammengeflanscht, wobei der Flansch der Antriebswelle 6 so ausgebildet ist, daß, zusammen mit dem Kolbenflansch 130, ein Ringspalt 131 entsteht. Durch die Rotation des Ringspaltes tritt das Gas mit einem erheblichen Drall in den Druckraum, der durch die kreisrunde Innenfläche des Gehäuses 4 und der Außenfläche des Ringkolbens 7 gebildet wird. Durch den Drall wird das Gas nach außen an die Zylinderfläche des Druckgehäuses 4 zentrifugiert. Durch die Überlagerung der Längsgeschwindigkeit entsteht eine spiralförmige Gasbewegung in Richtung Druckstutzen 25. Hierdurch erfolgt eine hervorragende Wärmeabgabe an die Außenseite des mit Kühlrippen versehenen Gehäuses, dessen gesamte Zylinderfläche zur Wärmeabführung zur Verfügung steht. Speziell im Niederdruckbereich kann bei dieser Ausführung auf eine zusätzliche Nachkühlung verzichtet werden.

Das mit hoher Geschwindigkeit seitlich aus den Drucköffnungen 241 austretende Gas wird im Ringspalt 131 verzögert, wodurch die Geräuschbildung und Pulsation beim Austritt aus dem Ringspalt erheblich vermindert wird. Bei einer ölgeschmierten Maschine erfolgt bereits am Spaltaustritt eine Fliehkraftabscheidung infolge des hohen spezifischen Gewichtes des Öles. Der Ringspalt kann zusätzlich mit einer Beschaufelung versehen werden.

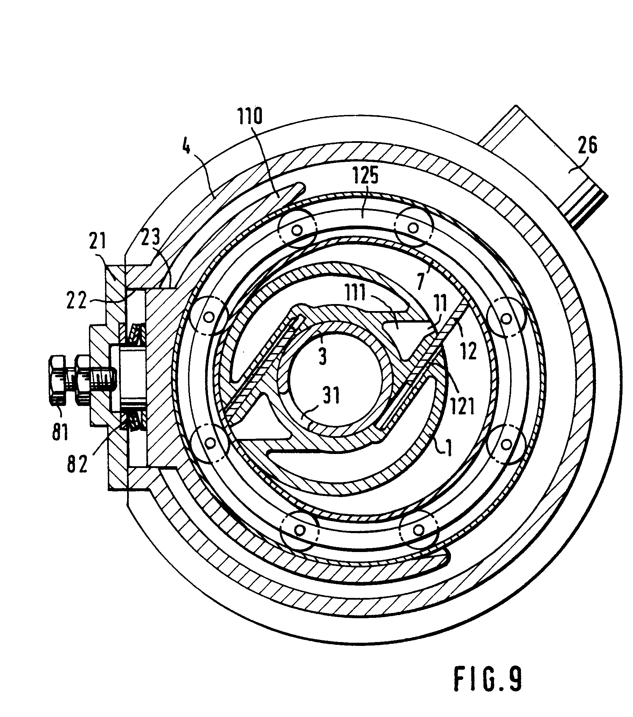

Fig. 9 zeigt einen Querschnitt durch Fig. 8. Im stehenden Gehäuse 4 befindet sich eine kreisrunde Bohrung 22, die zur Lagerung des Zapfens 23 des halbseitig offenen Lagerkörpers 110 angeordnet ist. In dieser Bohrung 22 ist der Lagerkörper 110 - schwenkbar und radial verschiebbar gelagert. Mittels Tellerfedern 82 wird das Wälzlager 125 kraftschlüssig mit dem Ringkolben 7 an den Drehkolben 1 angepreßt, in der Art, daß der Ringkolben 7 den Drehkolben 1 ca. 60° umschlingt. Mittels einer Stellschraube 81 kann die Rückfederung infolge des Verdichtungsdruckes begrenzt werden. Mit dem Verschlußdeckel 21 wird das Gehäuse 4 verschlossen. Durch die schwenkbare Lagerung des Lagerträgers 110 in der Bohrung 22 werden Fluchtungsfehler ausgeglichen. Bei Einsatz eines Verdichters nach dem Verdichtungsmechanismus 1, 2, 3 wie hier in Fig. 9, abweichend von Fig. 8 dargestellt, ist diese Maschine besonders für Öleinspritzung geeignet.

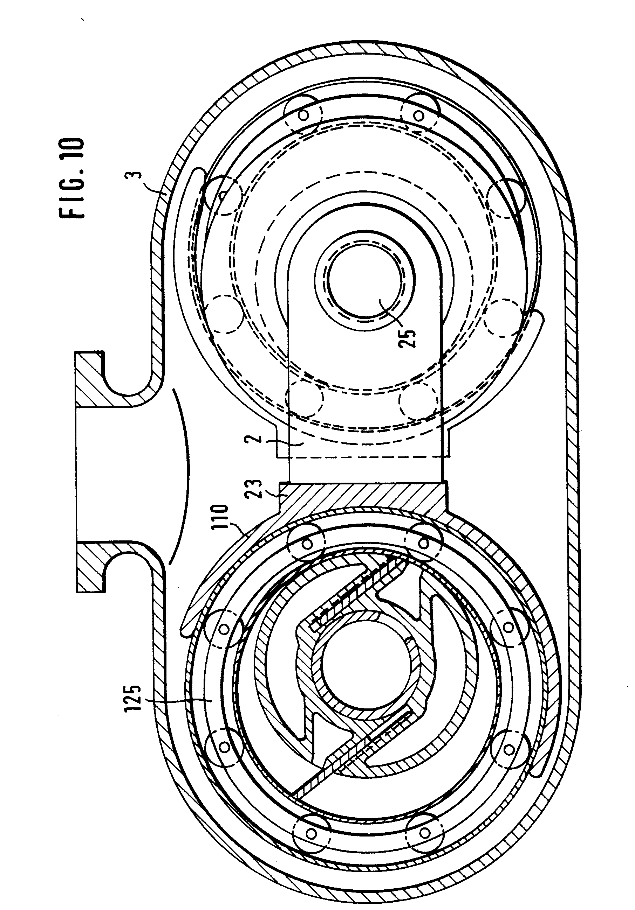

Fig. 10 zeigt die paarweise Anordnung eines Verdichters nach dem Verdichtungsmechanismus Fig. 1, 2, 3 in einem Sauggehäuse 3 mit dem Saugstutzen 25. Zwei Verdichter werden mit der Stirnseite 23 des Lagerbügels 110 zusammengeflanscht. Ein Element wird mittels eine Flanschwelle 6 (Fig. 8) außerhalb des Sauggehäuses angetrieben und treibt selbst über einen Zahnriemen (nicht dargestellt) das zweite Verdichterelement mit gleicher Drehrichtung an. Eine gegenläufige Dreheinrichtung beider Verdichterelemente kann durch eine kämmende Verzahnung von zwei Kolbenflanschen 130 (nicht dargestellt) erzielt werden. Durch Versetzen der Trennschieber um ca. 90° zueinander erfolgen pro Umdrehungen vier Verdichtungen, was zu eine weitere Verminderung der Pulsation führt. Die Saugleistung eines Verdichters in der dargestellten Größe beträgt bei 10.000 Umdrehungen pro Minute ca. 360 Kubikmeter pro Stunde.

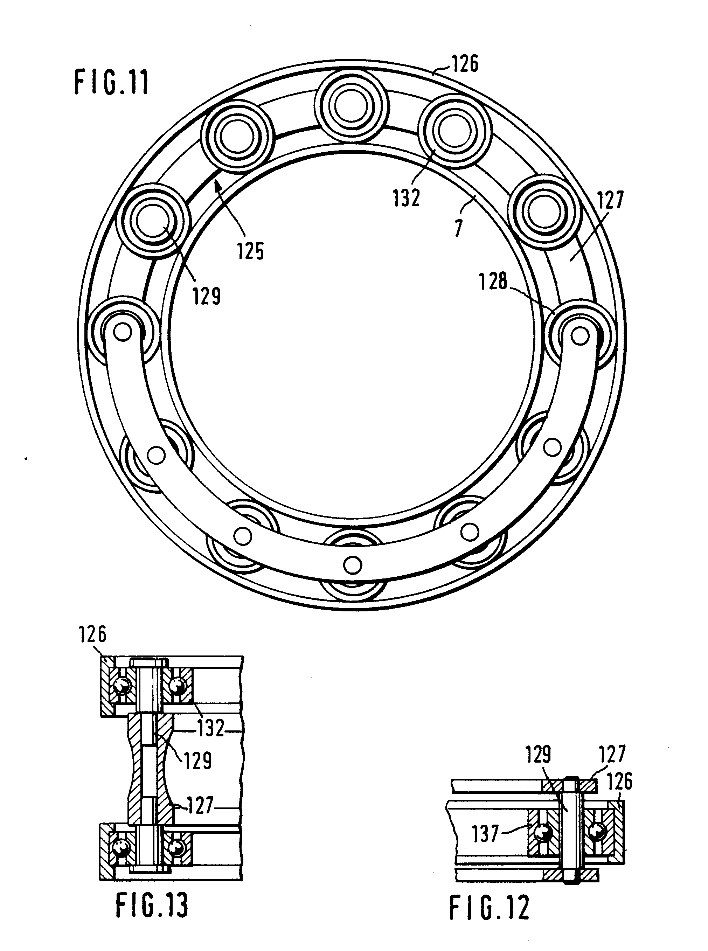

Fig. 11 bis 13 zeigen das Turbolager zur Realisierung der vom Verdichtungssystems her zulässigen hohen Drehzahlen. Das Lager 125 besteht aus einem dünnwandigen zylindrischen Außenring 126, der sich der Konfiguration des Lagerbügels 110 anpaßt. Im Ringraum zwischen Außenring 126 und Ringkolben 7 werden auf dem Umfang standardisierte Wälzlager verteilt, die durch seitlich angeordnete elastische Führungsringe 127 und Bolzen 129 auf Abstand gehalten werden.

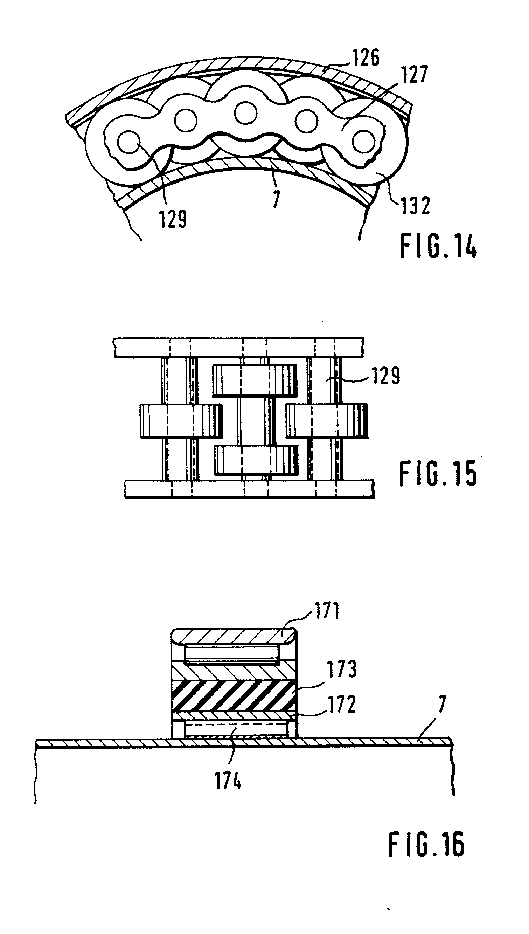

Die durch Vorspannung über den Lagerbügel und durch Verdichtung erzeugten Radialkräfte Fr liegen gegenüber und belasten den Außenring des Wälzlagers 132 ohne nennenswerte Kraft auf die Wälzelemente der Lager 132. Die Anzahl der Lager 132 richtet sich nach der Größenordnung der Belastung. Das Lager kann einreihig (Fig. 12), zweireihig (Fig. 13) oder bei hoher Belastung kammartig - (Fig. 14 und 15) ausgeführt werden. Der Einsatz dieses Lagers, das kostengünstig hergestellt werden kann, beschränkt sich nicht auf die Anwendung des Verdichters. Durch Verwendung von seitlich geschlossenen Standardlagern 13 kann ölfreier Betrieb gewährleistet werden.

Die Grenzdrehzahl des Turbolagers liegt 2 -3-fach höher als die Grenzdrehzahl käffiggeführter Standardlager in der gleichen Abmessung.

Fig. 14 und 15 zeigen im Teilschnitt ein Turbolager mit kammartig versetzten Wälzlagern.

Fig. 16 zeigt die Anordnung eines Standardwälzlagers auf dem Ringkolben, wie man sie für Drehzahlen bis ca. 4.000 Umdrehungen pro Minute ausführen kann. Der Innenring des Nadellagers 171 wird auf einen dünnwandigen Stützring 172 aufvulkanisiert, der mittels Toleranzfeder 174 mit Vorspannung auf dem Ringkolben 7 befestigt ist. Die Toleranzfedern 174 sind wellenförmig oder zickzackförmig ausgeführt. Über ihre Vorspannung wird der Innen ring des Wälzlagers 171 axial fixiert. Durch den Ringspalt zwischen 172 und 7 wird die Gummierung 173 von der heißeren Oberfläche des Ringkolbens 7 getrennt. Gleichzeitig kann Kühlluft zugeführt werden. Bei dieser Ausführung wird das Wälzlager 171 nicht deformiert, die Federwirkung erfolgt über die Gummierung 173.

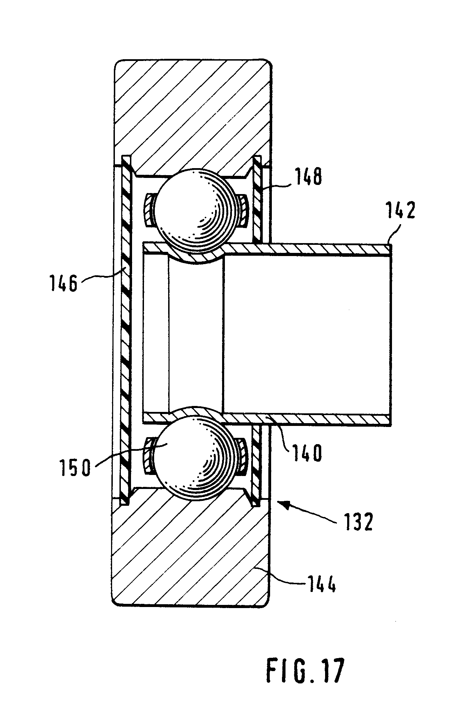

Fig. 17 zeigt eine besondere Ausführungsform des Lagers 132 des Stütz-Turbolagers 125. Der oben erläuterte Bolzen ist hierbei als eine dünnwandige Hülse 140 ausgebildet, deren aus dem Lager herausragendes freies Ende 142 in eine entsprechende Bohrung des hier nicht weiter dargestellten elastischen Führungsringes eingesetzt ist. Die Wälzelemente 144 sind auch bie dieser Ausführungsform des inneren Wälzlagers ringförmig als Wälzrollen ausgebildet. Im Vergleich mit massiven Kugeln oder zylindrischen Rollen sind derart ausgebildete ringförmige Wälzelemente nachgiebig deformierbar. Die durch die erfindungsgemäße Hülse 140 bedingten Rückstellkräfte sind gering und die Deformierbarkeit der ringförmigen Wälzelemente kann genutzt werdenm, ohne allzugroße Ansprüche an die Herstellgenauigkeit zu stellen. Der elastisch federnde Führungsring kann ferner mit radialer Vorspannung die ringförmigen Wälzelemente an den äußeren deformierbaren Stütz-oder Lagerring andrücken. Insgesamt ist in optimaler Weise ein deformierbares Stützlager mit extrem niedrigen Reibbeiwerten geschaffen. Sämtliche inneren Wälzlager sind entsprechend gemäß Fig. 17 mit Dichtscheiben 146 und 148 versehen, so daß eine funktionssichere Schmierung der inneren Wälzkörpper 150 gewährleistet wird. Die Wälzelemente 144 sowie die Lager-oder Stützringe des Stützlagers 125 werden problemlos belüftet und eine zuverlässige Wärmeabfuhr auch und gerade aus dem Bereich der Lager ist sichergestellt. Die Temperaturerhöhung ist wesentlich geringer als beim Einsatz herkömmlicher Lager.

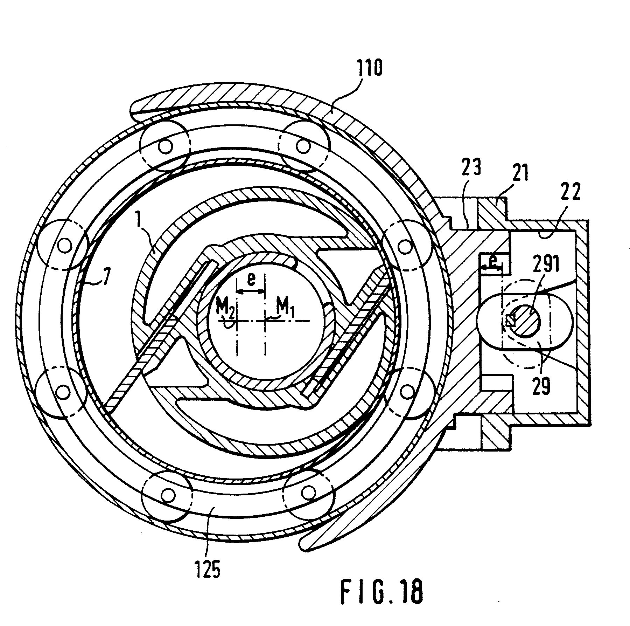

Fig. 18 zeigt den Querschnitt durch eine Maschine mit Leerlaufregelung. Beim Zuschalten von Verdrängermaschinen ergeben sich mitunter Probleme. Da sofort der Gegendruck ansteht, treten speziell beim Zuschalten eines bereits drehenden Antriebes, z.B. durch Schaltkupplungen, stoßartige Belastungen auf. Dies kann vermieden werden, indem man den Lagerbügel 110, zusammen mit dem Rollring 7 und dem Lager 125 soweit nach rechts verschiebt, bis der Mittelpunkt M 2 nahezu mit dem Mittelpunkt M 1 des Drehkolbens zusammenfällt. Dadurch entsteht ein arbeitsfreier Ringraum zwischen Drehkolben 1 und Ringkolben 7. Erreichen kann man das über einen Exzenter 29, der in einem Gehäuse 21 schwenkbar mit einer Welle 291 gelagert wird. Das Gehäuse 21 ist mit dem Lagerbügel 2 zusammengeflanscht. In der Bohrung 21 ist der Lagerzapfen 23 des Lagerbügels 110 verschiebbar angeordnet.

Nach Schwenken des Exzenters 29 um ca. 90° wird durch die Fliehkraft der Trennschieber 12 und durch die Gaskräfte der Ringkolben 7 mit Lagerträger 110 um ca. den Betrag e nach rechts verschoben bis zu einem vorgesehenen Anschlag. Die Leerlaufleistung entspricht dann den geringen Lagerverlusten.

Bezugszeichenliste

1 Drehkolben
2 Gehäusebügel
3 Steuerrohr (Druck-oder Saugrohr)
4 Gehäuse
6 Flanschwelle
7 Ringkolben (Rollring)
11 Saugschlitz
12 Trennschieber
13 Druckschlitz
14 Ansaug-oder Einlaßöffnung
21 Verschlußdeckel
22 Bohrung
23 Zapfen
25 Druckstutzen
26 Saugstutzen
29 Exzenter
31 Schlitz im Rohr 3
32 Bohrung
33 Mutter
41 Gehäusedeckel
52 Nadellager
61 Zapfen von 3
62 Gleitringdichtung
64 Wälzlager
70 Druckventil
81 Stellschraube
82 Tellerfeder
110 Lagerkörper, Lagerring
111 Ansaugöffnung
121 Luftschlitz in 12
124 Schlitz in 1
125 Stütz-Antriebslager
126 Außenring
127 Führungsring,
129 Bolzen
130 Kolbenflansch
131 Ring
132 inneres Lager
140 Hülse
142 Ende von 140
144 Wälzelement
146,148 Dichtscheibe
150 innerer Wälzkörper
171 Nadellager
172 Stützring
173 Gummierung
174 Toleranzfeder
241 Druckbohrung oder Drucköffnung in 130

**Ansprüche**

1. Maschine, insbesondere Arbeitsmaschine zum Verdichten und Fördern von Fluiden, mit einem Kolben (1), mit einem dünnwandigen Rollring (7), der exzentrisch zur Achse (M 1) des Kolbens (1) drehbar angeordnet ist und der an der Umfangsfläche des Kolben (1) über einen Winkelbereich (phi) flächig anliegt und mit wenigstens einem Trennschieber (12) zwischen Arbeitsräumen (S, D), deren Volumen bei Drehung des Rollringes (7) veränderbar ist, dadurch gekennzeichnet, daß der Rollring (7) über wenigstens ein Lager (125) in einem Lagerträger (110) abgestützt ist und von diesem an die Umfangsfläche des Kolbens (1) gepreßt wird, daß der um ein Steuerrohr (3) drehbare Kolben (1) in dem genannten Winkelbereich (phi) an der Innenfläche des Rollringes (7) anliegt und daß der den Kolben (1) in dem Winkelbereich (phi) zylindrisch umschlingende Rollring (7) vom Kolben (1) über Reibschluß antreibbar ist.

2. Maschine nach Anspruch 1, dadurch gekennzeichnet, daß das deformierbar ausgebildete Lager (125) einen nachgiebigen Führungsring (127) für ringförmige Wälzelemente (144) aufweist, die mittels inneren Lagern (132) auf Bolzen (139) und/oder Hülsen (140) angeordnet sind, die in dem Führungsring (127) befestigt sind.

3. Maschine nach Anspruch 1 oder 2, dadurch gekennzeichnet, daß der Lagerträger (110) zu der dem genannten Winkelbereich (phi) abgewandten Seite geöffnet ist und/oder den Rollring (7) in dem Winkelbereich (phi), der insbesondere etwa 60° groß ist, an den drehbaren Kolben (1) anpreßt.

4. Maschine nach einem der Ansprüche 1 bis 3, dadurch gekennzeichnet, daß in dem Winkelbereich (phi) der Mittelpunkt des Krümmungsradius (R1) des Lagerträgers (110) auf der Drehachse (M2) des Kolbens (1) liegt und daß der weitere Verlauf der etwa halbseitigen Umschlingung des Lagerträgers (110) im wesentlichen dem natürlichen Kurvenzug des leicht deformierten Rollringes (7) entspricht und/oder daß der Mittelpunkt (M2) des Rollringes (7) um einen Betrag (e + delta e) exzentrisch zum Mittelpunkt (M1) des Kolbens (1) angeordnet ist.

5. Maschine nach einem der Ansprüche 1 bis 4, dadurch gekennzeichnet, daß in dem drehbaren Kolben (1) zwei gegenüberliegende Trennschieber (12) tangential zu dem Steuerrohr (3) in entsprechenden Schlitzen (124) geführt werden, die radial nach innen zum Steuerrohr (3) eine Öffnung (13, 14) aufweisen.

6. Maschine nach einem der Ansprüche 1 bis 5, dadurch gekennzeichnet, daß das Steuerrohr (3) einen Schlitz (31) aufweist, daß der drehbare Kolben (1) unmittelbar hinter den Trennschiebern (2) Schlitze (11) aufweist, die bei Drehung des Kolbens (1) durch den Rollring (7) um einen Winkel, der wesentlichen dem Winkelbereich (phi) entspricht, verschlossen werden und/oder daß die ersten Schlitze (31) des Steuerrohres (3) derart angeordnet und in ihrer Länge ausgebildet sind, daß nach Beendigung des Druckvorganges und bei Beginn der Verdichtung die Hinterkante der Öffnung (13) des Schlitzes (124) die Vorderkante des ersten Schlitzes (31) überschneidet und ferner entsprechend dem vorgesehenen Druckverhältnis die Vorderkante des diametral gegenüberliegenden Schlitzes (124) die Hinterkante des ersten Schlitzes (31) vom Steuerrohr (3) öffnet (Fig. 2 und 3).

7. Maschine nach einem der Ansprüche 1 bis 6, dadurch gekennzeichnet, daß das Steuerrohr (3) schwenkbar in einem Gehäuse (2) angeordnet ist (Fig. 6 bis 8) und/oder daß der Lagerträger (110) drehfest im Gehäuse angeordnet ist.

8. Maschine nach einem der Ansprüche 1 bis 7, dadurch gekennzeichnet, daß das Steuerrohr (3) als Saugrohr ausgebildet ist, welches halbseitig mit einer perforierten Saugöffnung (311) versehen ist und durch die Öffnungen (14) des drehbaren Kolbens (1) die Steuerung derart vorgegeben ist, daß bei maximaler Füllung (Fig. 4) und beginnender Verdichtung saugseitig die Hinterkante der Öffnung (14) die Öffnungen (311) des Steuerrohrs (3) verschlossen werden und daß druckseitig die Rückströmung durch in dem drehbaren Kolben (1) angeordnete und mit diesem mitrotierende Druckventile (70), die bevorzugt in zylindrischen Bohrungen (241) im Kolben (1) in der Nähe der Trennschieber (12) angeordnet sind, verhindert wird.

9. Maschine nach einem der Ansprüche 1 bis 8, dadurch gekennzeichnet, daß das verdichtete Fluid aus mitrotierenden Druckventilen (70) austritt, deren Öffnungen (241) mit einem Ringraum (131) in Verbindung stehen, der durch den Kolbenflansch (130) und den Wellenflansch (6) gebildet wird, wobei der Druckstutzen (25) eines geschlossenen und die Maschine umgebenden Gehäuses (4) an der gegenüberliegenden Seite des Fluidaustrittes angeordnet ist, so daß das Fluid spiralförmig das stehende Gehäuse (4) verläßt (Fig. 8).

10. Maschine nach einem der Ansprüche 1 bis 9, dadurch gekennzeichnet, daß der Lagerträger (110) schwenkbar und radial verschiebbar, insbesondere mittels Zapfen (23) in einer Bohrung (22) des Gehäuses (4) gelagert ist und/oder durch Beaufschlagung mittels einer Feder (82) der Rollring (7) an den Drehkolben (1) angepreßt wird, wobei die Radialverschiebung bevorzugt durch einen von außen einstellbaren Anschlag (81) begrenzt wird (Fig. 9, 18).

11. Maschine nach einem der Ansprüche 1 bis 10, dadurch gekennzeichnet, daß zwecks Leerlaufregelung der Rollring (7) derart radial verschiebbar angeordnet ist, daß der Mittelpunkt (M2) des Rollringes (7) im wesentlichen mit dem Mittelpunkt des Drehkolbens (M1) zusammenfällt (Fig. 17).

12. Maschine nach einem der Ansprüche 1 bis 11, dadurch gekennzeichnet, daß zwei Maschinensysteme in einem Gehäuse (8) angeordnet sind, deren Lagerkörper (110) an Stirnseiten (23) miteinander verbunden sind, wobei der eine Drehkolben den anderen Drehkolben entweder gleichsinnig, bevorzugt mit einem Riemenantrieb, oder gegensinnig mittels einer bevorzugt auf den Kolbenflanschen (130) angeordneten Verzahnung, antreibt, wobei die Lage der Trennschieber zur Vergleichmäßigung um ca. 90° zueinander versetzt sind (Fig. 10).

13. Maschine nach einem der Ansprüche 1 bis 12, dadurch gekennzeichnet, daß das Stützlager - (125) einen dünnwandigen Außenring (126) und/oder einen dünnwandigen Innenring aufweist, der insbesondere gleichzeitig auch der Rollring (7) ist, und daß in dem Ringraum zwischen den deformierbaren Ringen (7 und 126) innere Wälzlager - (132) über den Umfang verteilt angeordnet sind, die mittels eines elastisch, nachgiebigen Führungsringes (127) sowie Bolzen (129) und/oder Hülsen (140) auf Abstand gehalten werden.

14. Maschine nach einem der Ansprüche 1 bis 13, dadurch gekennzeichnet, daß der Innenring eines Wälzlagers (171) mit einem dünnwandigen Stützring (172) durch Vulkanisieren verbunden ist und daß zwischen dem Rollring (7) und dem Stützring (172) wellenförmige oder zick-zackförmige Toleranzringe mit Vorspannung eine axiale Fixierung erzeugen (Fig. 16).

FIG.1

FIG. 2

FIG.3

FIG.4

FIG.5

FIG.6

FIG.7

FIG.8

0 224 878

FIG.9

FIG. 10

FIG.11

126

132

7

127

125

129

128

FIG.13

126

132

129

127

FIG.12

129

127

126

137

FIG.14

FIG.15

FIG.16

FIG.17

FIG.18